# FASCICULE DE BREVET EUROPEEN

(11) **EP 1 725 812 B1**
(45) Date de publication et mention de la délivrance du brevet: **13.06.2007**
(21) Numéro de dépôt: 05728112.3
(22) Date de dépôt: 22.02.2005
(51) Int. Cl.: F23C 10/18, F23C 10/04, F23L 7/00

(54) **CHAUDIERE OXY-COMBUSTION AVEC PRODUCTION D'OXYGENE**
SAUERSTOFF ERZEUGENDER SAUERSTOFFVERBRENNUNGSKESSEL
OXYGEN-PRODUCING OXYCOMBUSTION BOILER

(30) Priorité: 25.02.2004 FR 0450350
(43) Date de publication de la demande: 29.11.2006
(73) Titulaire: Alstom Technology Ltd, 5401 Baden (CH)
(72) Inventeur: MORIN, Jean-Xavier, F-45170 NEUVILLE AUX BOIS (FR); BEAL, Corinne, F-78960 VOISINS LE BRETONNEUX (FR); SURANITI, Silvestre, F-13100 AIX EN PROVENCE (FR)
(74) Mandataire: Lenne, Laurence
(86) Numéro de dépôt international: PCT/FR2005/050113
(87) Numéro de publication internationale: WO 2005/085708

(56) Documents cités:
- US-B1- 6 505 567
- US-B2- 6 562 104

## Description

La présente invention concerne les chaudières de centrale de production d'électricité et plus particulièrement celles utilisant des combustibles solides contenant des matières carbonées.

Généralement ce type de chaudières utilise comme comburant de l'air. Cette technologie est éprouvée, mais elle doit faire face à de nouvelles exigences de capture de CO₂ dans les fumées provenant de la combustion de ces matières carbonées avant le rejet dans l'atmosphère.

Il est bien sur possible d'extraire sélectivement le CO₂ contenu dans les fumées, mais compte tenu de leur faible teneur (15% en volume), cette post capture se révèle pénalisante en rendement et extrêmement coûteuse.

Pour réduire la quantité de CO₂ produite, il est connu des brevets US 6 202 574 et US 6 505 567 du titulaire, de réaliser la combustion en utilisant de l'oxygène non plus dilué dans de l'azote comme dans l'air, mais de l'oxygène dilué dans du CO₂ recyclé. La chaudière ne produit alors plus qu'un courant gazeux de CO₂ et de vapeur d'eau qui peut être séché et liquéfié pour être transporté vers une utilisation ultérieure du CO₂ ou pour une séquestration souterraine.

Dans ce cas de combustion O₂/CO₂, l'étape sélective d'extraction du CO₂ contenu dans les fumées, à forte consommation énergétique est supprimée, mais il apparaît une nouvelle pénalisation énergétique provenant de la consommation électrique liée à la production d'oxygène par voie cryogénique qui est la seule disponible à ce jour pour produire de grandes quantités d'oxygène. La consommation due à la production d'oxygène est telle qu'elle risque de rendre prohibitive la technologie de l'oxy-combustion économiquement parlant.

Il existe par ailleurs des membranes de transport d'oxygène à haute température permettant d'extraire l'oxygène de l'air. Elles sont utilisées pour alimenter des brûleurs comme par exemple ceux décrits dans la demande de brevet WO02/077419 ou les brevets US 6 539 719, US 6 562 104. Mais ces membranes ne peuvent être utilisées qu'en milieu gazeux. D'autre part, il est nécessaire de balayer par un gaz auxiliaire l'oxygène qui sort de la membrane.

L'objet de la présente invention est de proposer une chaudière utilisant de l'oxygène comme comburant qui ait à la fois un rendement élevé, une grande compacité et soit d'un coût relativement raisonnable.

La chaudière selon l'invention est à lit fluidisé circulant, elle utilise des combustibles solides et de l'oxygène obtenu par des membranes de production d'oxygène à haute température, et elle est caractérisée en ce que les membranes sont disposées dans le lit. Ces membranes sont par exemple de type OTM (Oxygen Transport Membranes). Les membranes fonctionnant à plus de 700°C (entre 700 et 1000°C), leur positionnement dans le lit extérieur est particulièrement adapté car la température des solides circulant dans le lit extérieur est de 750 à 900°C. Ce qui est particulièrement remarquable car les fenêtres de température de fonctionnement du lit fluidisé circulant coïncident avec la fenêtre de température optimale d'utilisation des membranes.

Selon une première caractéristique, les membranes sont parcourues par de l'air sous pression. Afin de faciliter l'extraction de l'air des membranes celui si est légèrement sous pression. L'air provient d'une soufflante ou d'un compresseur qui assure une pression supérieure à celle régnant dans l'enceinte fluidisée.

Selon une caractéristique particulière, les membranes sont placées dans les solides fluidisés du lit extérieur. Les solides chauds prélevés de la boucle principale des solides circulants assurent l'apport thermique pour maintenir les membranes à la température optimale de fonctionnement et ils assurent l'évacuation de l'oxygène de la paroi externe des membranes. Les solides assurent par ailleurs un excellent contact thermique avec un très fort flux de matières balayant les parois externes des membranes à la bonne température, ce qui améliore la cinétique de transfert de l'oxygène par rapport à un échange sur gaz seul. Puisque l'échange thermique se fait avec des solides et non pas avec du gaz, la surface des membranes nécessaire pourra être plus faible, ce qui est essentiel pour la compacité et l'économie de la technologie. Le réglage possible du débit des solides alimentant les membranes permet l'ajustage de la température des chambres du lit extérieur.

Selon une autre caractéristique, les membranes sont placées au dessus des solides fluidisés du lit extérieur. Dans ce cas le lit extérieur sert à réchauffer le gaz tel que du CO₂ recyclé utilisé pour la fluidisation du lit et qui assure ensuite l'appoint thermique et l'évacuation de l'oxygène. Il est possible de combiner avantageusement les deux implantations de membranes: dans les solides et au dessus des solides.

Selon une disposition particulière, les membranes sont disposées sur au moins une partie du pourtour du périmètre du bas foyer. Cette disposition permet de disposer de surfaces supplémentaires de membranes.

Selon une autre disposition particulière, les membranes constituent un ensemble reposant sur la sole du foyer. La sole étant fluidisée par du CO₂ recyclé, le placement des membranes sur la sole du foyer est possible puisque la rigidité de la sole réduit les contraintes mécaniques sur les tubes et donc permet de disposer de grandes longueurs.

Selon une première variante, les membranes sont constituées de tubes de grande longueur supportés par des plaques intermédiaires. Les plaques tubulaires intermédiaires peuvent ou non être refroidies avec des caissons d'entrée et de sortie.

Selon une seconde variante, les membranes sont constituées de tubes de petite longueur avec des caissons intermédiaires. Les tubes peuvent être disposés en série ou en parallèle.

Selon une troisième variante, les membranes sont constituées de tubes concentriques dont le tube intérieur sert de support au tube de membrane externe. Le tube intérieur est suffisamment rigide pour permettre la tenue mécanique des membranes. Le tube intérieur comprend des ouvertures afin que l'oxygène de l'air puisse passer au travers du tube de membrane disposé dessus et qu'il soit suffisamment rigide pour améliorer la tenue mécanique des membranes.

Selon une disposition particulière de la troisième variante, il existe un espace entre les deux tubes. Une entretoise est disposée entre les deux tubes de façon à assurer la tenue du tube extérieur. Il est parcouru par l'air soit dans le même sens que le courant dans l'espace annulaire dans ce cas il comporte des ouvertures permettant des communications de l'air des tubes internes vers l'espace annulaire, soit à contre courant avec une communication à l'extrémité du tube dans ce cas il ne comporte pas d'ouvertures sur sa longueur.

Selon une autre disposition de la troisième variante, l'air circule à contre courant dans l'espace entre les deux tubes. Dans ce cas les deux tubes ne comportent pas d'ouvertures sur leur longueur, mais ils communiquent par leur extrémité. L'air parcourt donc le premier tube intérieur de bout en bout, puis il passe dans l'entre tube et re-parcourt l'entre tube en sens inverse. L'avantage de cette solution réside dans le fait que l'air est en contact direct avec la membrane sur toute la longueur du tube extérieur et non uniquement au droit des ouvertures.

Selon une autre disposition, un lit fluidisé dense est placé le long des parois internes du foyer. Dans cette configuration, l'alimentation dudit lit fluidisé dense contenant les membranes par des solides descendants recueillis le long des parois du foyer permet d'augmenter les performances de la chaudière à charge partielle et d'abaisser sa charge minimum, car on n'a alors plus besoin de recourir uniquement à des solides soutirés de la circulation externe qui varie fortement en fonction de la charge de la chaudière en particulier à faible charge, ce qui est un avantage économique pour l'exploitant. Les zones de capture du lit dense peuvent directement accueillir les tubes membranaires dont l'échappement de CO₂ O₂ est directement intégré dans le foyer sans gaines de liaison.

Selon une autre caractéristique, l'air parcourant les membranes est acheminé vers une chaudière de récupération. L'enthalpie contenue dans cet air appauvri en oxygène est récupérée par ladite chaudière de récupération, puis l'air appauvri et refroidi à basse température (environ 80°C) car non corrosif, il est rejeté directement à l'atmosphère par la cheminée.

Selon une caractéristique complémentaire, la chaudière de récupération sur air appauvri est combinée de façon étanche avec une chaudière de récupération des fumées de combustion sortant du foyer. La combinaison entre les deux chaudières de récupération permet de rendre l'installation plus compacte, mais elles sont séparées de façon étanche de façon à ne rejeter que de l'air à l'atmosphère, tandis que le CO₂ est lui transféré vers une séquestration ou un stockage. En effet, toute non-étanchéité entre les deux chaudières abaisse la pureté du CO₂ par introduction d'azote et d'oxygène qui peuvent compromettre l'usage final du CO₂.

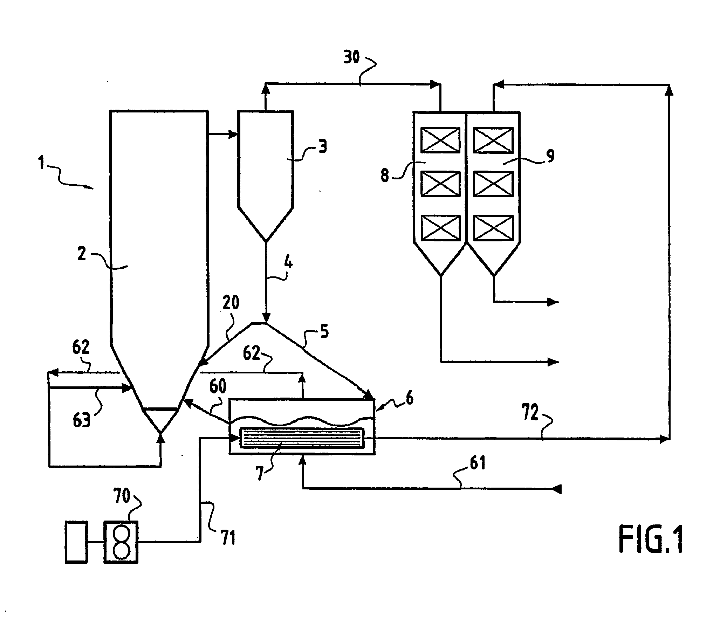

L'invention sera mieux comprise à la lecture de la description qui va suivre donnée uniquement à titre d'exemple et faite en se référant aux dessins annexés dans lesquels :
- le figure 1 est une vue générale d'une chaudière selon l'invention,
- la figure 2 est une vue générale d'une chaudière avec la variante d'un lit disposé dans le foyer,
- la figure 3 est une vue détaillée du lit avec une première disposition des membranes,
- la figure 4 est une vue détaillée du lit avec une seconde disposition des membranes,
- la figure 5 est une vue détaillée du lit avec une troisième disposition des membranes,
- la figure 6 est une vue détaillée d'un tube support avec une membrane,
- la figure 7 est une vue détaillée du lit avec les membranes disposées au dessus des solides du lit,
- la figure 8 est une vue détaillée du lit avec les membranes disposées à la fois dans et au dessus du lit,
- la figure 9 est une vue détaillée du foyer avec des membranes disposées dans le bas du foyer,
- la figure 10 est une vue détaillée du foyer avec des membranes disposées sur la sole du foyer,
- la figure 11 est une vue du dessus de la sole du foyer de la figure 10
- la figure 12 est une vue en coupe transversale de la troisième variante avec un espace entre les deux tubes
- la figure 13 est une vue en coupe longitudinale de la troisième version.

Comme on peut le voir à la figure 1, la chaudière à lit fluidi sé 1 comprend un foyer 2 et un cyclone ou séparateur 3 qui permet la séparation des solides contenus dans les fumées, une boucle de recirculation des solides 4, une extraction des solides 5 vers un lit fluidisé dense 6, appelé lit extérieur, contenant un ensemble de membranes 7.

Un conduit 30 entraîne les fumées de combustion sortant du cyclone 3 vers une chaudière de récupération de chaleur 8.

Le lit extérieur 6 reçoit les solides 67 par le conduit d'extraction 5, qui sont ensuite réinjectés dans le foyer 2 par le conduit 60. La fluidisation du lit 6 est assurée par du CO₂ recyclé arrivant par le conduit 61 et repart ensuite par le conduit 62 pour être réintroduit dans le foyer 2 par des injecteurs 63 disposés à plusieurs niveaux.

L'air extérieur arrive par l'intermédiaire d'une soufflante ou compresseur 70 puis est dirigé vers le lit 6 par la canalisation 71 , il passe ensuite les membranes 7 pour ressortir par la canalisation 72 qui dirige l'air appauvri vers une chaudière de récupération 9 pour être ensuite rejeté dans l'atmosphère.

Nous allons maintenant décrire la circulation de l'air dans la chaudière 1 de la figure 1. L'air arrive par la canalisation 71 après avoir été mis sous pression par la soufflante 70, la pression doit être légèrement supérieure à celle régnant dans l'enceinte du lit 6 afin de favoriser l'extraction de l'oxygène de l'air. L'air appauvri est envoyé par une canalisation 72 vers la chaudière de récupération 9 où il est refroidi, puis il est rejeté dans l'atmosphère.

Les solides sont séparés dans le cyclone 3 puis dirigés par le conduit 4 soit vers le lit 6 par 5, soit par le conduit de retour direct 20 vers le foyer 2. Les solides arrivés dans le lit 6 sont refroidis puis réinjectés dans la partie basse du foyer 2.

Le lit 6 est fluidisé par du gaz tel que du CO₂ recyclé arrivant par la canalisation 61, ce gaz de fluidisation se mélange avec l'oxygène produit par les membranes 7 et est ensuite acheminé vers la partie basse du foyer 2 par les canalisations 62.

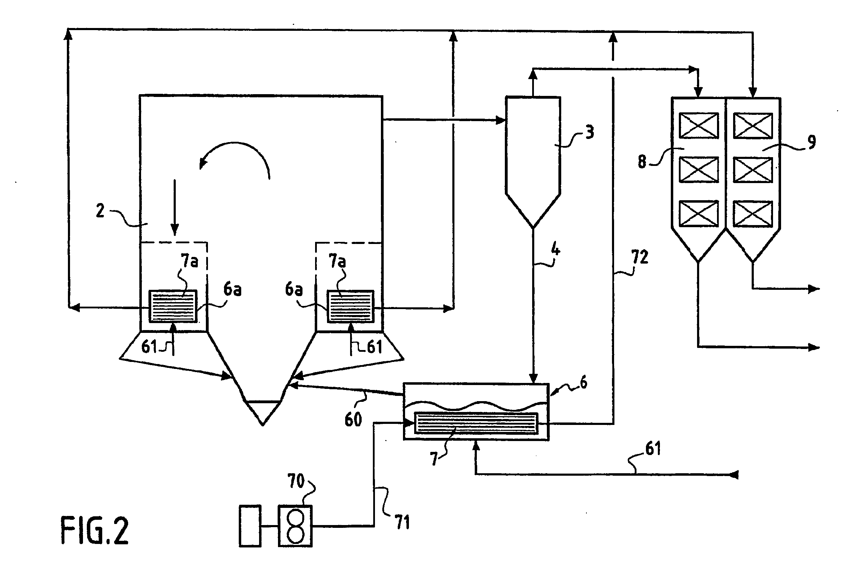

Dans la variante représentée à la figure 2, un lit fluidisé dense 6a est placé dans le bas du foyer 2, il contient des membranes 7a. Les solides descendants sont alors recueillis le long de la paroi du foyer 2 et tombent dans le lit 6a situé sur une partie ou sur toute la périphérie du foyer 2. Un gaz de fluidisation, tel que du CO₂ recyclé, parcourt le lit 6a et se mélange avec l'oxygène dégagé par les membranes 7a et ressort directement dans le foyer 2 sans nécessiter de gaines de liaison.

Nous allons maintenant décrire la disposition des membranes dans le lit 6 ou 6a.

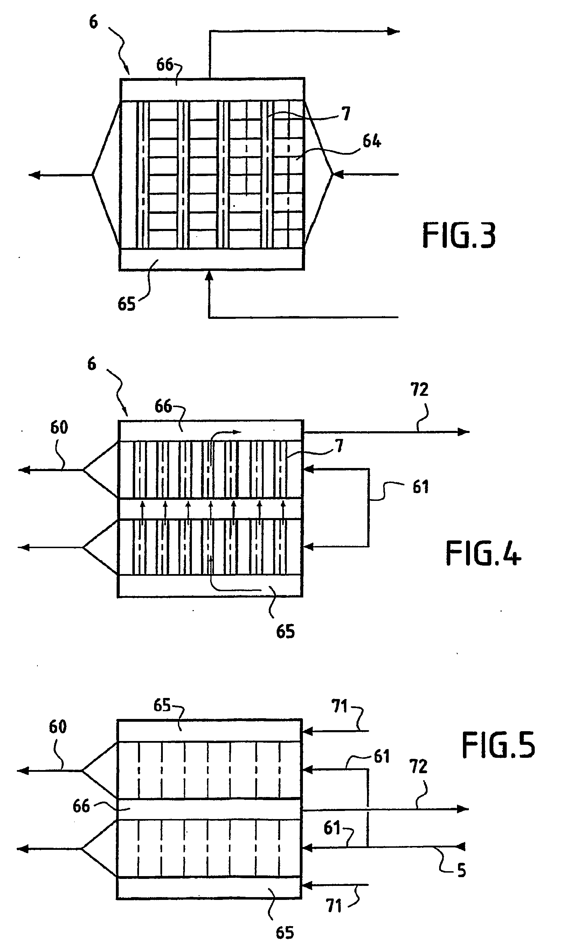

Dans la variante présentée à la figure 3, les membranes 7 sont de grande longueur et disposées dans la longueur du lit 6 et soutenues par des plaques tubulaires intermédiaires 64 qui peuvent être refroidies ou non. L'air entre par le caisson d'entrée 65 et sort par le caisson de sortie 66.

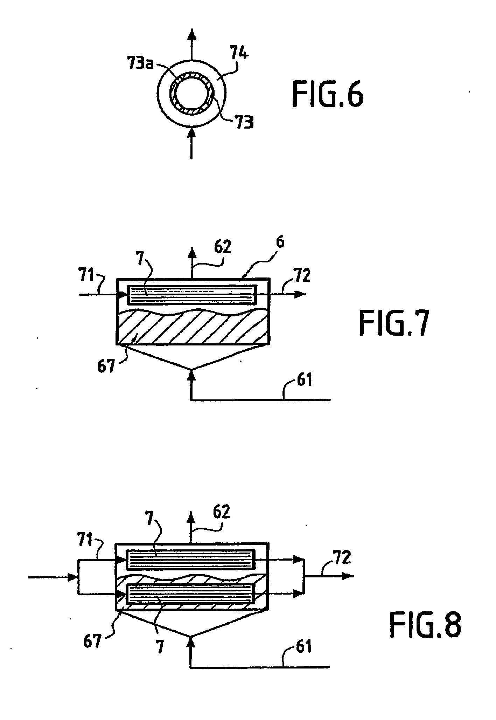

Les variantes représentées aux figures 4 et 5 correspondent à un lit 6 où les membranes 7 sont constitués de tubes de petite longueur qui sont disposés entre des caissons intermédiaires d'entrée 65 et de sortie 66 agencés en série (figure 4) ou en parallèle (figure 5).

La variante représentée à la figure 6 est une membrane 7 constitué d'un tube support 73 entouré du tube membranes 74. L'air circule à l'intérieur du tube support 73 comprenant des ouvertures 73a qui permettent à l'oxygène de l'air d'être extrait et de traverser la membrane 74.

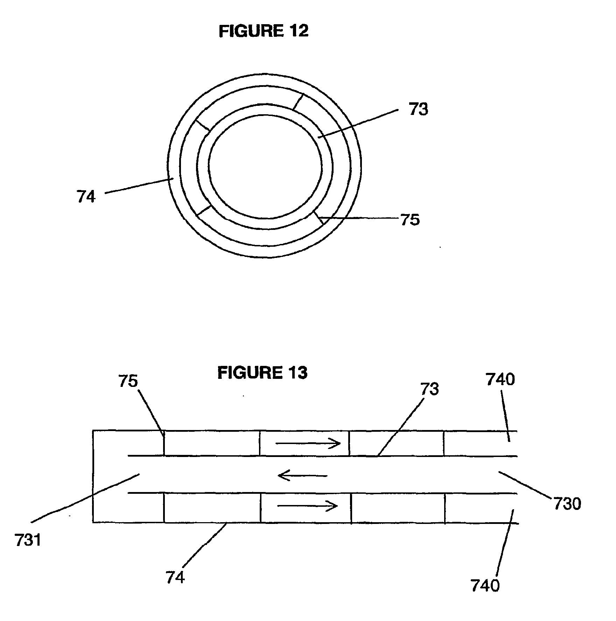

La figure 12 représente une disposition particulière de la variante représentée à la figure 6, où les deux tubes 73 et 74 sont espacés afin de laisser passer l'air. Ils sont re liés entre eux par des entretoises 75.

La figure 13 illustre une disposition où les deux tubes concentriques 73 et 74 ne sont ouverts qu'à leur extrémité 730, 731 et 740. L'air circule dans le sens de la flèche, il entre par l'extrémité 730 du tube 73 ressort par l'autre extrémité 731 qui communique avec le tube 74 par lequel l'air repart jusqu'à l'extrémité 740 du tube 74.

Dans la variante de la figure 7, les membranes 7 sont disposés dans le lit 6 au dessus des solides 67, dans ce cas le gaz de fluidisation (par exemple du CO₂ recyclé) est réchauffé par les solides 67 et permet le bon fonctionnement des membranes 7 en portant le gaz de fluidisation à la bonne température ce qui rend possible l'extraction de l'oxygène de l'air et assure son évacuation.

En combinant des membranes 7 immergées dans les solides et au dessus des solides 67 on augmente la surface membranaire 7 et donc le volume potentiel de production d'oxygène, pour un volume de lit identique.

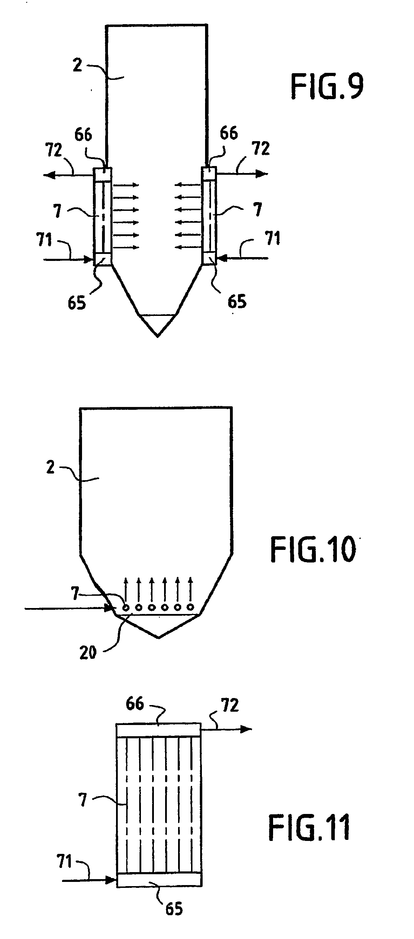

Pour disposer de membranes 7 supplémentaires, il est possible d'en disposer sur le pourtour du périmètre du bas foyer 2 (figure 9) ou en constituer un ensemble reposant sur la sole 20 du foyer 2 (figure 10 et 11).

Dans la variante des figures 10 et 11, les membranes 7 sont posées sur la sole 20 du foyer 2 qui par sa rigidité réduit les contraintes mécaniques subies par les membranes 7 et permet de disposer de grandes longueurs.

## Revendications

1. Chaudière (1) à lit fluidisé circulant utilisant des combustibles solides et de l'oxygène obtenu par des membranes (7, 7a) de production d'oxygène à haute température, **caractérisé en ce que** les membranes (7, 7a) sont disposées dans le lit (6, 6a).

2. Chaudière (1) selon la revendication 1, **caractérisé en ce que** les membranes (7, 7a) sont parcourues par de l'air sous pression.

3. Chaudière (1) selon la revendication précédente, **caractérisé en ce que** les membranes (7, 7a) sont placées dans les solides (67) fluidisés du lit (6, 6a).

4. Chaudière (1) selon la revendication 3 ou 4, **caractérisé en ce que** les membranes (7) sont placées au dessus des solides (67) fluidisés du lit extérieur (6).

5. Chaudière (1) selon une des revendications précédentes, **caractérisé en ce que** les membranes (7) sont disposées sur au moins une partie du pourtour du périmètre du bas foyer (2).

6. Chaudière (1) selon une des revendications précédentes, **caractérisé en ce que** les membranes (7) constituent un ensemble reposant sur la sole (20) du foyer (2).

7. Chaudière (1) selon une des revendications précédentes, **caractérisé en ce que** les membranes (7) sont constituées de tubes de grande longueur supportés par des plaques intermédiaires (64).

8. Chaudière (1) selon une des revendications 1 à 5, **caractérisé en ce que** les membranes (7) sont constituées de tubes de petite longueur avec des caissons intermédiaires.

9. Chaudière (1) selon une des revendications 1 à 5, **caractérisé en ce que** les membranes (7) sont constituées de tubes concentriques dont le tube intérieur (73) sert de support au tube de membranes externes (74).

10. Chaudière (1) selon la revendication précédente, **caractérisé en ce qu'**il existe un espace entre les deux tubes (73, 74).

11. Chaudière (1) selon la revendication précédente, **caractérisé en ce que** l'air circule à contre courant dans l'espace entre les deux tubes (73, 74).

12. Chaudière (1) selon une des revendications 3 à 10, **caractérisé en ce que** le lit (6) est placé à l'extérieur du foyer (2).

13. Chaudière (1) selon une des revendications précédentes, **caractérisé en ce qu'**un lit (6a) est placé est placé le long des parois interne du foyer (20).

14. Chaudière (1) selon la revendication 1, **caractérisé en ce que** l'air parcourant des membranes (7) est acheminé vers une chaudière de récupération (9).

15. Chaudière (1) selon la revendication précédente, **caractérisé en ce que** la chaudière de récupération (9) est combinée de façon étanche avec une chaudière de récupération (8) des fumées de combustion sortant du foyer (2).

## Claims

1. Circulating fluidized bed boiler (1) using solid fuels and oxygen obtained by oxygen-producing membranes (7, 7a) at high temperature, **characterized in that** the membranes (7, 7a) are arranged in the bed (6, 6a).

2. Boiler (1) according to claim 1, **characterized in that** the membranes (7, 7a) arc passed through by pressurized air.

3. Boiler (1) according to the preceding claim, **characterized in that** the membranes (7, 7a) are placed in the fluidized solids (67) of the bed (6, 6a).

4. Boiler (1) according to claim 3 or 4, **characterized in that** the membranes (7) are placed above the fluidized solids (67) of the outer bed (6).

5. Boiler (1) according to one of the preceding claims, **characterized in that** the membranes (7) are arranged on at least part of the periphery of the perimeter of the bottom furnace (2).

6. Boiler (1) according to one of the preceding claims, **characterized in that** the membranes (7) form an assembly resting on the floor (20) of the furnace (2).

7. Boiler (1) according to one of the preceding claims, **characterized in that** the membranes (7) are formed of tubes of great length supported by intermediate plates (64).

8. Boiler (1) according to one of claims 1 to 5, **characterized in that** the membranes (7) are formed of tubes of small length with intermediate caissons.

9. Boiler (1) according to one of claims 1 to 5, **characterized in that** the membranes (7) are formed of concentric tubes, the inner tube (73) of which serves as a support for the tube of outer membranes (74).

10. Boiler (1) according to the preceding claim, **characterized in that** there is a space between the two tubes (73, 74).

11. Boiler (1) according to the preceding claim, **characterized in that** the air flows in counter-current in the space between the two tubes (73, 74).

12. Boiler (1) according to one of claims 3 to 10, **characterized in that** the bed (6) is placed outside the furnace (2) .

13. Boiler (1) according to one of the preceding claims, **characterized in that** a bed (6a) is placed along the inner walls of the furnace (20).

14. Boiler (1) according to claim 1, **characterized in that** the air passing through the membranes (7) is guided towards a waste heat boiler (9).

15. Boiler (1) according to the preceding claim, **characterized in that** the waste heat boiler (9) is combined in a sealed manner with a waste heat boiler (8) for the combustion flue gases exiting from the furnace (2).

## Patentansprüche

1. Kessel (1) mit zirkulierendem fluidisiertem Bett, der feste Brennstoffe und Sauerstoff verwertet, der von den Membranen (7, 7a) erhalten wird, die hochtemperaturigen Sauerstoff produzieren, **dadurch gekennzeichnet, daß** die Membranen (7, 7a) im Bett (6, 6a) angeordnet sind.

2. Kessel (1) nach dem Anspruch 1, **dadurch gekennzeichnet, daß** die Membranen (7,7a) von Druckluft durchlaufen werden.

3. Kessel (1) nach dem vorhergehendem Anspruch, **dadurch gekennzeichnet, daß** die Membranen (7, 7a) in den fluidisierten Festkörpern (67) des Bettes (6,6a) untergebracht sind.

4. Kessel (1) nach dem Anspruch 3 oder 4, **dadurch gekennzeichnet, daß** die Membranen (7) über den fluidisierten Festkörpern (67) des äußeren Bettes (6) untergebracht sind.

5. Kessel (1) nach einem der vorhergehenden Ansprüche, **dadurch gekennzeichnet, daß** die Membranen (7) auf mindestens einem Teil der Strecke des Umfangs des unteren Herdbereichs (2) angeordnet sind.

6. Kessel (1) nach einem der vorhergehenden Ansprüche, **dadurch gekennzeichnet, daß** die Membranen (7) eine Einheit bilden, die auf der Sohle (20) des Herdes (2) liegen.

7. Kessel (1) nach einem der vorhergehenden Ansprüche, **dadurch gekennzeichnet, daß** die Membranen (7) aus Rohren großer Länge gebildet werden, die von Zwischenplatten (64) getragen werden.

8. Kessel (1) nach einem der Ansprüche 1 bis 5, **dadurch gekennzeichnet, daß** die Membranen (7) aus Rohren kleiner Länge mit Zwischenkammern gebildet werden.

9. Kessel (1) nach einem der Ansprüche 1 bis 5, **dadurch gekennzeichnet, daß** die Membranen (7) aus konzentrischen Rohren bestehen, deren inneres Rohr (73) als Unterstützung für das Rohr aus äußeren Membranen (74) dient.

10. Kessel (1) nach dem vorhergehenden Anspruch, **dadurch gekennzeichnet, daß** zwischen den beiden Rohren ein Zwischenraum besteht (73, 74).

11. Kessel (1) nach dem vorhergehenden Anspruch, **dadurch gekennzeichnet, daß** die Luft entgegen der Strömung im Zwischenraum zwischen den beiden Rohren (73, 74) zirkuliert.

12. Kessel (1) nach einem der Ansprüche 3 bis 10, **dadurch gekennzeichnet, daß** das Bett (6) außerhalb des Herdes (2) untergebracht ist.

13. Kessel (1) nach einem der vorhergehenden Ansprüche, **dadurch gekennzeichnet, daß** ein Bett (6a) entlang der inneren Wände des Herdes (20) untergebracht ist.

14. Kessel (1) nach dem Anspruch 1, **dadurch gekennzeichnet, daß** die die Membranen (7) durchziehende Luft zu einem Rückgewinnungskessel (9) befördert wird.

15. Kessel (1) nach dem vorhergehenden Anspruch, **dadurch gekennzeichnet, daß** der Rückgewinnungskessel (9) dicht mit einem der Rückgewinnungskessel (8) der aus dem Herd (2) austretenden Verbrennunqsqase verbunden ist.
